**Europäisches Patentamt**

**European Patent Office**

**Office européen des brevets**

(19)

(11) Publication number : **0 385 002 B1**

# EUROPEAN PATENT SPECIFICATION

(12)

(45) Date of publication of patent specification :
03.05.95 Bulletin 95/18

(51) Int. Cl.⁶ : **G02C 5/14, G02C 11/00**

(21) Application number : **89302003.2**

(22) Date of filing : **28.02.89**

(54) **Spectacles.**

(43) Date of publication of application :
05.09.90 Bulletin 90/36

(45) Publication of the grant of the patent :
03.05.95 Bulletin 95/18

(84) Designated Contracting States :
**AT DE FR GB IT**

(56) References cited :
**EP-A- 0 100 392**
**EP-A- 0 187 304**
**FR-A- 1 098 731**
**FR-A- 2 367 411**
**US-A- 3 768 892**
**US-A- 3 957 361**
**US-A- 4 139 281**
**PATENT ABSTRACTS OF JAPAN, vol. 7, no.**
**220 (P-226)[1365], 30th September 1983; &**
**JP-A-58 113 914**

(73) Proprietor : **Nakamatsu, Yoshiro**
**1-10-1105 Minami Aoyama 5-chome**
**Minato-ku**
**Tokyo (JP)**

(72) Inventor : **Nakamatsu, Yoshiro**
**1-10-1105 Minami Aoyama 5-chome**
**Minato-ku**
**Tokyo (JP)**

(74) Representative : **Shaw, Laurence**
**5th Floor,**
**Metropolitan House,**
**1 Hagley Road,**
**Edgbaston**
**Birmingham B16 8TG (GB)**

EP 0 385 002 B1

## Description

The invention relates to spectacles and has as its primary object the provision of spectacles which exert little or no weight on the nose of the wearer, as known e.g. from US-A-3 768 892 or US-A-4 139 281.

Accordingly, the invention provides a pair of spectacles having lenses located in frames from which extend side arms to engage the head of the wearer in the region of the ear, weight counterbalancing means connected to the side arms being arranged to reduce the load on the nose of the wearer, characterised in that the weight means comprises pads located and pivotally arranged at or towards the end of the side arms and dimensioned to overlie the front side of the lenses when the spectacles are folded.

The position of the weight means may be adjustable, and the length of the side arms may be varied to vary the position of the weight means.

In one preferred embodiment, the weight means comprises a magnetic substance, which preferably comprises a flat permanent magnet received in a pad, optionally in a receptacle therefor. In another preferred embodiment the weight means comprises pads dimensioned and arranged to engage the rear neck portion of the wearer. The pad may include an extension to engage part of the ear.

In order that the invention may be well understood it will now be described by way of example with reference to the accompanying diagrammatic drawings, in which:

Figure 1 is a diagrammatic illustration of a side view of a pair of spectacles to illustrate the principle of counterbalancing;

Figure 2 is a plan view of a first embodiment of the invention with the spectacles in folded condition and Figure 3 shows a detail thereof drawn to an enlarged scale;

Figure 4 to 6 show side views of another embodiment of the invention and modifications thereof;

Figure 7 is a perspective view of a further embodiment;

Figure 8 is a plan view of another modification of Figure 7;

Figures 9 and 10 show detail of Figures 7 and 8;

Figure 11 is a side view of another embodiment and Figure 12 is a plan view thereof;

Figures 13 and 14 are side views of modifications thereof;

Figure 15 is a cross-section of a side arm of spectacles of the invention, and

Figure 16 is a side view of another embodiment of the invention in the non-use position.

The same reference numerals are used where possible in the description of the different embodiments.

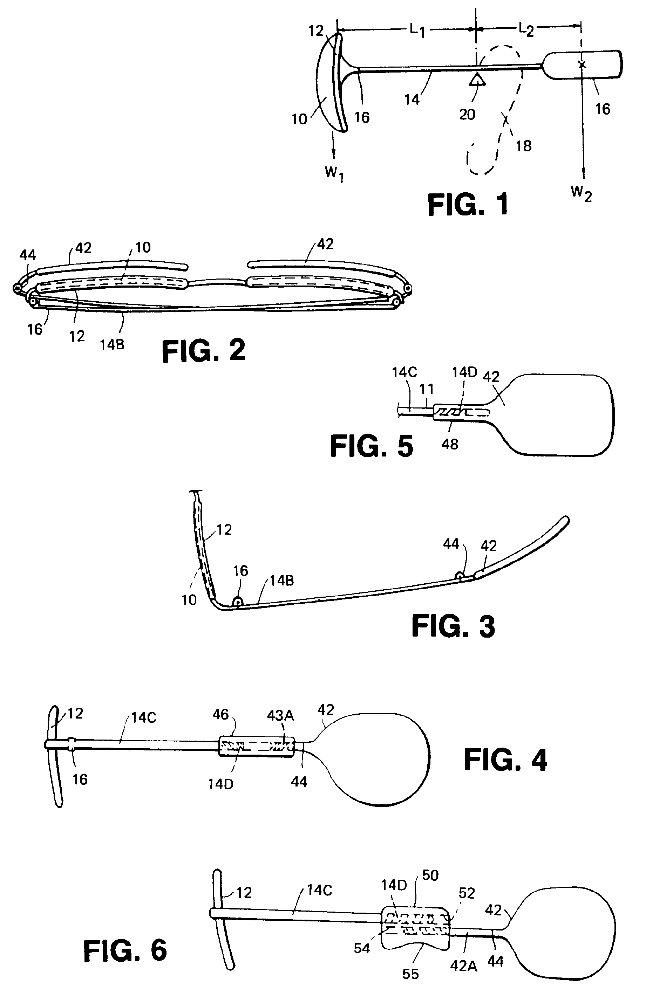

The spectacles of Figure 1 includes a pair of spectacle lenses 10 (only one shown) held in respective lens frames 12, a straight side arm 14 pivotally connected with each lens frames 12 and extending rearwardly therefrom, and a counter-weight or balancing element 16 mounted on the rearward end of each side arm 14. Such spectacles can be worn on the head of a user at the top of the wearer's ears 18 such that the weight of the spectacles will be balanced about a point 20 adjacent each ear 18. This may be explained by the following formula:

$$W1 \times L1 = W2 \times L2$$

where W1 is the weight of each lens 10; L1 the distance between the fulcrum point 20 and each lens 10; W2 the weight of each counterweight 16 and L2 the distance between the fulcrum 20 and each counter-weight 16.

As will be appreciated, the moment of the spectacles about the fulcrum 20 can be adjusted by increasing or decreasing the distance L2 between the fulcrum 20 and each counter-weight 16. In such a manner the load on the wearer's nose can be nullified.

In the first embodiment of the invention, shown in Figures 2 and 3, a counter-weight or balancing member 42 is pivotally connected at 44 with the rearward end of the spectacle side arms 14B and, as shown, serves as a cover for protecting the lenses 10 when the spectacles are folded into the unused state. The cover 42 is preferably made of soft material such as plastics or rubber and/or formed to have a relatively enlarged shape so that it will gently engage the user's head while stabilising the spectacles on the users head. The weight of the lens cover 42 may be selected so that the load is removed off the wearer's nose.

Figure 4 shows a modification of the spectacles shown in Figures 2 and 3, which includes a resilient connecting tube 46 for connecting the rearward end 14D of each of a straight spectacle side arm 14C with the forward end 42A of the corresponding lens cover 42. The length of each of the side sections in the spectacles can be adjusted by moving the ends of the side arms and cover within the connecting tube 46.

Figure 5 shows another modification which comprises a connecting tube 48 formed integrally in the forward portion of the lens cover 42 and to receive the rearward end 14D of each of the straight side arms 14C to secure it on the spectacles.

In the modification of Figure 6, the rearward end 14D of each of the straight side arms 14C is connected with the forward end 42A of the lens cover 42 by a connecting member 50 having two parallel passageways 52 and 54, each to receive one of the end portions of the corresponding ends of the side arms or lens cover. The connecting member 50 also includes a curved bottom portion 55 adapted to be placed on the top of the wearer's ear lobe.

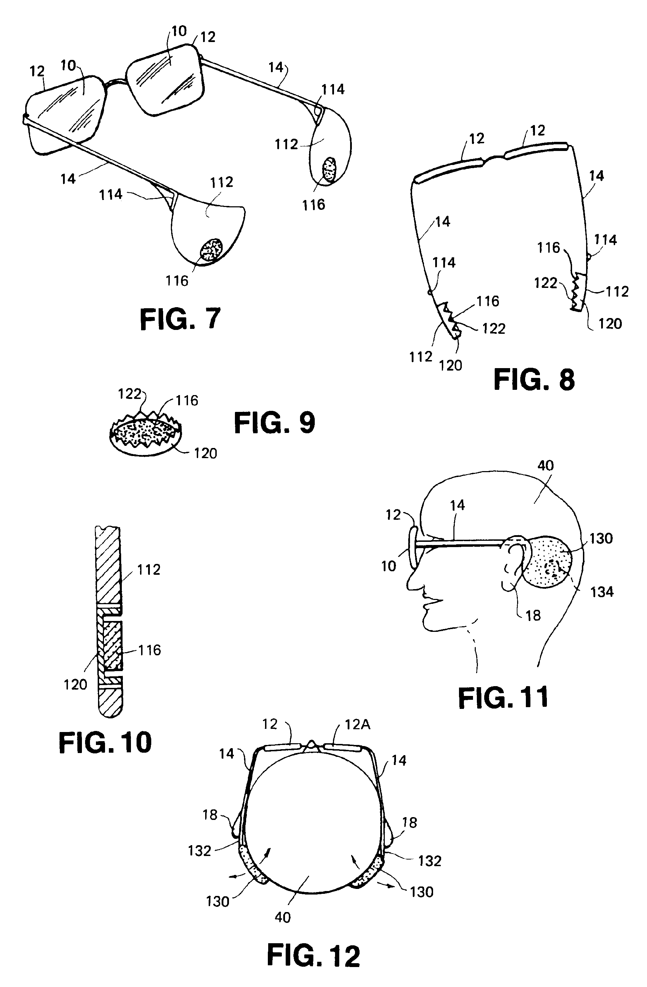

Figure 7 shows a modified embodiment in which a flat pad 112 is pivotally mounted by a hinge 114 at the rearward end of each side arm 14 to hold the spectacles on the head more securely. A permanent magnet 116 is present in the pads 112. As shown in Figures 8 and 9, the permanent magnets 116 may be located within a crown-shaped receptacle 120 having a plurality of saw teeth edges 122 and which may be embedded in each of the pads 112, as shown in Figure 10. In such an arrangement, the magnet assembly can increase the strength of the magnetic field created between the magnet 116 and the receptacle 120 while providing a mechanical stimulus to the user's head. Any slippage between the rearward ends of the spectacle side arms and the user's head can be reduced by the magnet assemblies in the pads 112.

Figures 11 and 12 show a pair of spectacles similar to those shown in Figure 7, in which they comprise a pair of lenses 10 held by the respective lens frames 12, a bridge 12A connecting the lens frames 12 with each other and a pair of spectacle side arms 14 each pivotally coupled with one of the lens frames 12. A soft pad 130 is pivotally connected at 132 with the rearward end of each of the spectacle side arms 14. When the spectacles are worn on the wearer's head and contact his ears 18, the soft pads 130 are turned inwardly against the wearer's head 40 such that the inward face of each of the soft pads 130 will engage a recessed portion 134 in the rear portion of the neck. This assures that the entire weight of the spectacles can be supported by the soft pads 130 without any load on the wearer's nose. It may be preferred that each of the soft pads 132 is resiliently biased against the head by spring means (not shown). Each of the soft pads 132 may include a counter-weight (not shown) embedded therein or a battery (not shown) which can supply a power to any electric equipment such as liquid crystal layers used to control the transparency in the lenses.

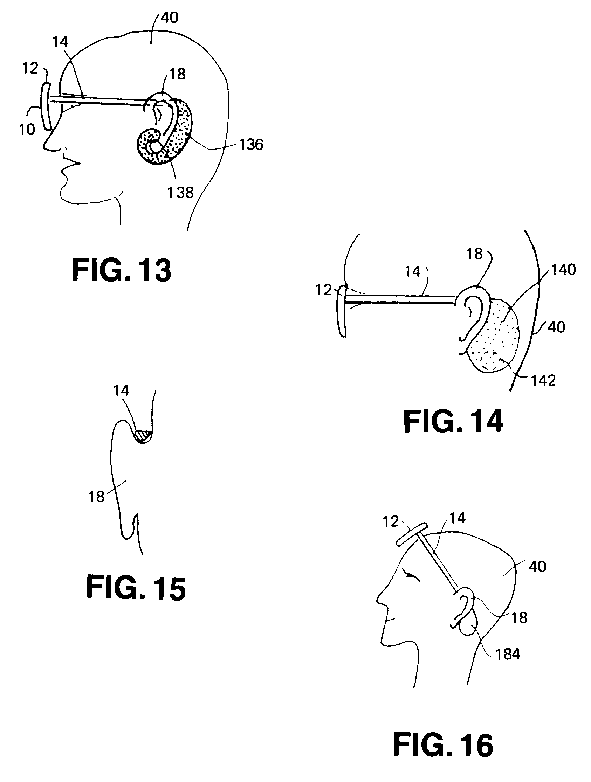

Figure 13 shows a modification of the spectacles shown in Figures 11 and 12, in which an arcuate soft pad 136 connected to the rearward end of each side arm 14 is looped about the ear 18 with the free end thereof received in engaging a recess 138 in the ear to support the spectacles securely on the user's head.

Figure 14 shows a modification of the spectacles shown in Figures 11 to 13, in which a soft pad 140 at the rearward end of the side arms 14 extends down behind the ears 18. The bottom end of each of the soft pads 140 includes a permanent magnet 142 embedded therein, which may influence the flow of blood in the head.

As shown in Figure 15, the side arms 14 are preferably of flat rectangular cross-section to apply gentle pressure against the tops of the ears 18.

As shown in Figure 16, the spectacles having balancing means on the rearward ends of the side arms 14 may be held at a position in which the forward lens frames 12 are located adjacent to the top of the head 40, under the influence of the balancing members 184.

Electrical equipment such as a hearing aid, audiophone, radio receiver or the like may be embedded in the pad connected with the rearward end of the side arm.

## Claims

1. A pair of spectacles having lenses (10) located in frames (12) from which extend side arms (14) to engage the head (40) of the wearer in the region of the ear (18), weight counterbalancing means connected to the side arms (14) being arranged to reduce the load on the nose of the wearer, characterised in that the weight means comprises pads (42) located and pivotally arranged at or towards the end of the side arms (14) and dimensioned to overlie the front side of the lenses (12) when the spectacles are folded.

2. Spectacles according to Claim 1 characterised in that the weight means comprises a magnetic substance (116).

3. Spectacles according to Claim 2 characterised in that the magnetic substance comprises a flat permanent magnet (116) received in a pad (112), optionally in a receptacle therefor (120).

4. Spectacles according to any of Claims 1 to 3 characterised in that the weight means comprises pads (140) dimensioned and arranged to engage the rear neck portion of the wearer.

5. Spectacles according to any one of Claims 1 to 4 characterised in that the pad (14) includes an extension (138) to engage part of the ear (18).

## Patentansprüche

1. Brille mit Linsen (10), die sich in Rahmen (12) befinden, von denen sich Seitenarme (14) erstrecken und am Kopf (40) des Trägers im Bereich des Ohres greifen (18), wobei an den Seitenarmen (14) befestigte Gewichtsausgleichsmittel angeordnet sind, um die auf die Nase des Trägers wirkende Last zu verringern, dadurch gekennzeichnet, daß das Gewichtsausgleichsmittel Polster (42) umfaßt, die an den oder in der Nähe der Enden der Seitenarme (14) schwenkbar angeordnet und so dimensioniert sind, daß sie auf die Vorderseite der Linsen (12) zu liegen kommen, wenn die Brille zusammengefaltet wird.

2. Brille nach Anspruch 1, dadurch gekennzeichnet, daß das Gewichtsausgleichsmittel eine magnetische Substanz (116) beinhaltet.

3. Brille nach Anspruch 2, dadurch gekennzeichnet, daß die magnetische Substanz einen flachen Dauermagneten (116) umfaßt, der von einem Polster (112), bei Bedarf in einem dafür vorgesehenen Aufnahmebehälter (120), aufgenommen wird.

4. Brille nach Anspruch 1, dadurch gekennzeichnet, daß das Gewichtsausgleichsmittel Polster (140) umfaßt, die so dimensioniert und angeordnet sind, daß sie am hinteren Nackenteil des Trägers angreifen.

5. Brille nach Anspruch 1, dadurch gekennzeichnet, daß das Polster (14) eine Verlängerung (138) aufweist, die an einem Teil des Ohrs (18) angreift.

**Revendications**

1. Paire de lunettes munie de lentilles (10) se trouvant dans une monture (12) à partir de laquelle se prolongent des branches latérales (14) qui s'adaptent à la tête (40) de l'utilisateur à hauteur de l'oreille (18), et pourvue de moyens faisant contrepoids et reliés aux branches latérales (14) disposés de manière à réduire le poids sur le nez de l'utilisateur caractérisée en ce que le contrepoids comprend des coussinets (42) situés et disposés de manière à pivoter à l'extrémité ou vers l'extrémité des branches latérales (14), et leur grandeur dépassant le côté avant des lentilles (12) quand les lunettes sont refermées.

2. Lunettes qui, selon la Revendication 1, sont caractérisées en ce que le contrepoids comprend une substance magnétique (116).

3. Lunettes qui, selon la Revendication 2, sont caractérisées en ce que la substance magnétique comprend un aimant plat permanent (116) muni d'un coussinet (112), se trouvant facultativement dans un réceptacle lui étant propre (120).

4. Lunettes qui, selon les Revendications de 1 à 3, sont caractérisées en ce que le contrepoids comprend des coussinets (140) dont la taille et la position sont déterminés de manière à s'adapter à la partie se rapprochant le plus de l'arrière du cou de l'utilisateur.

5. Lunettes qui, selon l'une des Revendications de 1 à 4, sont caractérisées en ce que le coussinet (14) comprend un prolongement (138) lui permettant d'engager une partie de l'oreille (18).

**FIG. 1**

**FIG. 2**

**FIG. 5**

**FIG. 3**

**FIG. 4**

**FIG. 6**

**FIG. 7**

**FIG. 8**

**FIG. 9**

**FIG. 10**

**FIG. 11**

**FIG. 12**

**FIG. 13**

**FIG. 14**

**FIG. 15**

**FIG. 16**